## Europäisches Patentamt

## European Patent Office

## Office européen des brevets

(19)

(11) Veröffentlichungsnummer: **0 184 772**
**B1**

(12) **EUROPÄISCHE PATENTSCHRIFT**

(45) Veröffentlichungstag der Patentschrift:
01.03.89

(51) Int. Cl.⁴: **B25J 17/02**

(21) Anmeldenummer: **85115464.1**

(22) Anmeldetag: **05.12.85**

(54) Gelenkkopf für Industrieroboter.

(30) Priorität: **06.12.84 DE 3444478**

(43) Veröffentlichungstag der Anmeldung:
**18.06.86 Patentblatt 86/25**

(45) Bekanntmachung des Hinweises auf die Patenterteilung:
**01.03.89 Patentblatt 89/9**

(84) Benannte Vertragsstaaten:
**CH DE FR GB LI**

(56) Entgegenhaltungen:
**CH-A- 458 002**
**FR-A- 2 534 176**

**IBM TECHNICAL DISCLOSURE BULLETIN, Band 27, Nr. 4A, September 1984, Seiten 2257-2260, New York, US; J.T. ROBINSON et al.: "Robot gimbal with three degrees of freedom"**

(73) Patentinhaber: **Hans Heynau GmbH, Moosacher Strasse 51, D-8000 München 40(DE)**

(72) Erfinder: **Vetter, Ulrich, Mistralstrasse 21, D-8044 Unterschleissheim(DE)**
Erfinder: **Neumeier, Jürgen, Caracciolastrasse 23, D-8000 München 45(DE)**

(74) Vertreter: **Pohl, Heribert, Dipl.-Ing et al, Standard Elektrik Lorenz AG Patent- und Lizenzwesen Postfach 30 09 29, D-7000 Stuttgart 30(DE)**

## Beschreibung

Die Erfindung betrifft einen Gelenkkopf für Industrieroboter mit zwei Freiheitsgraden und entsprechend zwei Drehachsen mit gemeinsamem Schnittpunkt, von denen die eine Drehachse für eine Verschwenkung des Werkzeuges und die andere Drehachse für die Drehung des Werkzeuges vorgesehen ist und bei dem die Drehachsen von Antriebswellen mit Kegelrädern angetrieben sind.

Ein solcher Gelenkkopf ist bekannt (DE-OS 3 219 292). Der bekannte Gelenkkopf besitzt den Nachteil, daß er aus einer Vielzahl von komplexen Bauteilen besteht, so daß er aus einer Vielzahl von komplexen Bauteilen bestehe, so daß sowohl seine Herstellung als auch seine Montage aufwendig und kostspielig ist.

Der Erfindung liegt daher die Aufgabe zugrunde, einen Gelenkkopf der eingangs geschilderten Art zu schaffen, dessen Bestandteile einfacher herzustellen und zu montieren sind, bei dem das Traggehäuse eine größere Steifigkeit besitzt und bei dem die Schmiermittel enthaltenden Hohlräume Leichter, d.h. durch handelsübliche Dichtelemente, abzudichten sind.

Diese Aufgabe ist erfindungsgemäß dadurch gelöst, daß ein gabelförmiges, einstückig ausgebildetes Traggehäuse vorgesehen ist, in das ein an die Gestalt des Traggehäuses angepaßtes Gelenkgehäuse einschiebbar ist, welches durch einen Gabeldeckel und einen Lagerbock, die jeweils durch eine Zinke des gabelförmigen Traggehäuses hindurchgetreten, an dem Traggehäuse zentriert befestigbar ist.

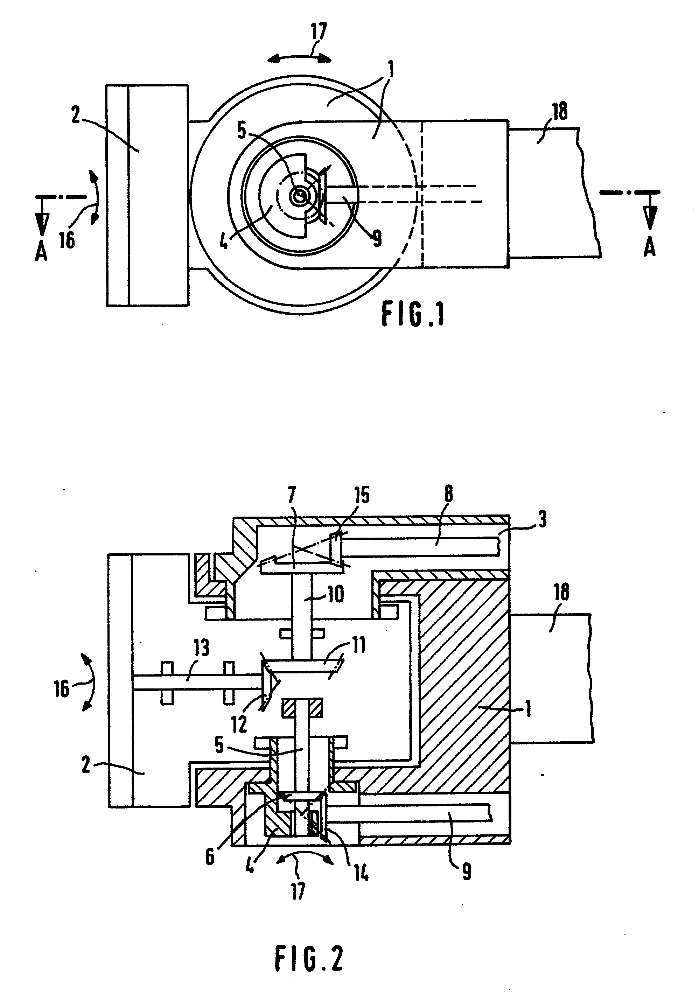

Die erfindungsgemäße Lösung ist nachstehend anhand der Figuren 1 und 2 erläutert. Es zeigen:

Fig. 1 ein Ausführungsbeispiel des erfindungsgemäßen Gelenkkopfes in Seitenansicht und
Fig. 2 den Längsschnitt durch den Gelenkkopf entlang der Linie A–A gemäß Fig. 1.

Wie aus Fig. 2 ersichtlich, besteht der Gelenkkopf aus dem Traggehäuse 1, welches – wie noch näher erläutert werden wird – gabelförmig ausgebildet und an seinem Ende mit zwei kopfhörerartigen Verdickungen versehen ist. In dem Traggehäuse 1 ist in Richtung des Pfeiles 17 schwenkbar das Gelenkgehäuse 2 angeordnet.

Weitere Einzelheiten des im Ausführungsbeispiel verwirklichten Gelenkkopfes sind aus Fig. 2 ersichtlich. Es ist hier das gabelförmig ausgestaltete Traggehäuse 1 gut erkennbar, welches ungeteilt, rundum geschlossen und somit öldicht ist. Außerdem besitzt der Gelenkkopf das Gelenkgehäuse 2, welches an die Gestalt des Traggehäuses 1 angepaßt ist und von dessen Stirnseite in dasselbe eingeschoben werden kann. Die zentrierte Befestigung des Gelenkgehäuses 2 im Traggehäuse 1 erfolgt durch die seitliche Befestigung des Gabeldeckels 3 und des Lagerbocks 4. Steckachse 5 und Kegelrad 6 sowie die Kegelräder 7 und 11 mit Welle 10 werden seitlich eingeschoben. Danach erfolgt die zentrierte Befestigung des Gelenkgehäuses 2 im Traggehäuse 1 durch die seitliche Befestigung des Gabeldeckels 3 und des Lagerbocks 4.

In dem Gelenkgehäuse 2 ist drehbar die Welle 10 gelagert, deren Enden mit den Kegelrädern 7 und 11 versehen sind. Das Kegelrad 11 steht im Eingriff mit dem Kegelrad 12, welches an dem einen Ende der drehbar gelagerten Welle 13 befestigt ist. Zwischen Kegelrad 12 und Welle 13 kann auch ein Übersetzungsgetriebe angeordnet sein. Die Steckachse 5 ist drehfest mit dem Gelenkgehäuse 2 und Kegelrad 6 verbunden. Zwischen Steckachse 5 und Gelenkgehäuse 2 kann auch ein Übersetzungsgetriebe angeordnet sein. Das Kegelrad 6 steht im Eingriff mit dem am Ende der Umlenkwelle 9 befestigten Kegelrad 14. Das Kegelrad 7 steht im Eingriff mit dem am Ende der Umlenkwelle 8 befestigten Kegelrad 15.

Durch Drehen der Umlenkwelle 8 wird die Welle 13 – wie durch den Pfeil 16 angedeutet – in Drehung versetzt und damit gleichzeitig ein an seiner dem Kegelrad 11 abgewandten Ende befestigtes – nicht gezeigtes – Werkzeug. Durch Drehen der Umlenkwelle 9 führt das Gelenkgehäuse 2 eine Schwenkbewegung um die Achse 5 aus, wie durch den Pfeil 17 angedeutet ist.

Die Drehbewegung der Umlenkwellen 8 und 9 kann direkt auf die Wellen erfolgen oder ein- oder mehrmals umgelenkt werden. So ist es z.B. möglich, die Drehbewegungen über zwei ineinanderliegende koaxiale Wellen einzuleiten, die im Aufnahmeflansch 18 drehbar gelagert sind und über Stirnräder oder Zahnriemen mit den Umlenkwellen verbunden sind.

## Patentansprüche

Gelenkkopf für Industrieroboter mit zwei Freiheitsgraden und entsprechend zwei Drehachsen mit gemeinsamem Schnittpunkt, von denen die eine Drehachse für eine Verschwenkung des Werkzeuges und die andere Drehachse für die Drehung des Werkzeuges vorgesehen ist und bei dem die Drehachsen von Antriebswellen mit Kegelrädern angetrieben sind, dadurch gekennzeichnet, daß ein gabelförmiges, einstückig ausgebildetes Traggehäuse (1) vorgesehen ist, in das ein an die Gestalt des Traggehäuses angepaßtes Gelenkgehäuse (2) einschiebbar ist, welches durch einen Gabeldeckel (3) und einen Lagerbock (4), die jeweils durch eine Zinke des gabelförmigen Traggehäuses hindurchtreten, an dem Traggehäuse zentriert befestigbar ist.

## Claims

Swivel head for industrial robots which have two degrees of freedom and, accordingly, two shafts whose axes intersect, said shafts being provided, respectively, for swivelling and rotating the tool and being driven by drive shafts with bevel gears, characterized in that there is provided a fork-shaped single-piece support housing (1) into which a swivel housing (2) adapted to the shape of the support housing is insertable and can be centrically fixed to the support housing by means of a cover (3) and a bearing bracket (4), each of which passes between the prongs of the fork-shaped support housing.

## Revendications

Tête articulée pour robot industriel, à deux degrés de liberté, comportant deux axes de rotation correspondants ayant un point d'intersection commun, dont l'un est prévu pour un balayage horizontal de l'outil et l'autre pour la rotation de l'outil, dans laquelle les axes de rotation sont entraînés par des arbres d'entraînement à pignon conique, caractérisée en ce qu'il est prévu un carter porteur (1) en forme de fourche conformé en une seule pièce, dans lequel s'ajuste un doîtier articulé (2) adapté à la forme du carter porteur, lequel est fixé de façon centrée au carter porteur par un capot de fourche (3) et un palier support (4) lesquels traversent chacun une branche du capot porteur en forme de fourche.

FIG.1

FIG.2